# EUROPEAN PATENT APPLICATION

(11) **EP 3 598 728 A1**
(43) Date of publication of application: **22.01.2020**
(21) Application number: 17900908.9
(22) Date of filing: 28.06.2017
(51) Int. Cl.: H04M 3/51, H04M 3/523

(54) **AGENT ALLOCATION METHOD AND DEVICE, SERVER, AND STORAGE MEDIUM**

(30) Priority: 13.03.2017 CN 201710148143
(71) Applicant: Ping An Technology (Shenzhen) Co., Ltd., Shenzhen Guangdong 518033 (CN)
(72) Inventor: ZHANG, Peng, Shenzhen Guangdong 518000 (CN); LI, Dejun, Shenzhen Guangdong 518000 (CN); ZHANG, Dongdong, Shenzhen Guangdong 518000 (CN)
(74) Representative: Penza, Giancarlo
(86) International application number: PCT/CN2017/090572
(87) International publication number: WO 2018/166104

(57) **Abstract**

An agent allocation method, comprising: collecting history service data of each agent; collecting classification statistics about the collected history service data of each agent according to different user levels of services, and calculating agent skill values of each agent corresponding to the different user levels; classifying agent skill values, corresponding to a same user level, of all agents into an agent skill value group, determining an agent queue corresponding to each user level in sequence according to the priority of the user level, and identifying each determined agent queue using an agent queue skill level; determining an agent queue skill level rank corresponding to each user level according to the agent skill value groups; and searching for idle agents in order according to the corresponding agent queue skill level rank in response to agent service requests sent by user terminals of different user levels.

## Description

### CROSS-REFERENCE TO RELATED APPLICATION

This application claims priority to Chinese Patent Application No. 201710148143.0, entitled "METHOD AND DEVICE OF AGENT ALLOCATION" filed March 13, 2017, the contents of which is expressly incorporated by reference herein in its entirety.

### TECHNICAL FIELD

The present disclosure relates to the field of telecommunication, particularly relates to a method, a device, a server and a storage medium of agent allocation.

### BACKGROUND

Agent service is an important way of the server system to serve a client. The agent service refers to the process of an agent providing the client with a respective service via the supporting system of the server.

There are primarily two ways by a conventional server to allocate agents for incoming line clients: one is to allocate available agents randomly, another is to allocate constant agent queues for divided client groups. In both of the foregoing two ways of allocating agents, it is possible that some or one of the agent(s) are/is idle, while the incoming line(s) of others or another is jammed, the agents are not properly allocated, and the incoming line processing is of low efficiency.

### SUMMARY

According to various embodiments, a method, a device, a server and a storage medium of agent allocation are provided.

A method of agent allocation includes:
collecting historical service data of each of agents;
performing classified counting of the collected historical service data of each of the agents according to different user levels being served, calculating agent skill values of each of the agents corresponding to the different user levels;
counting agent skill values of all agents corresponding to the same user level as an agent skill value group, successively determining agent queues corresponding to each of the user levels according to priorities of user levels, labeling each of the determined agent queues with an agent queue skill level;
labeling the determined agent queue with an agent queue skill level, establishing corresponding relations of the agent queue skill levels to the agents;
determining a ranking of agent queue skill levels corresponding to each of the user levels according to the agent skill value group, in the ranking of agent queue skill levels, the agent queue skill level to which the agent queue having a correspondence relation with the user level is directed is a first agent queue skill level ranked at a first place; and
finding an idle agent orderly according to the corresponding ranking of agent queue skill levels in response to agent service requests transmitted by user terminals of different user levels.

A device of agent allocation includes:
a historical service data collecting module configured to collect historical service data of each of agents;
an agent skill value calculation module configured to perform classified counting of the collected historical service data of each of the agents according to different user levels being served, and calculate agent skill values of each of the agents corresponding to the different user levels;
an agent queue skill level determination module configured to count the agent skill values of all agents corresponding to the same user level as an agent skill value group, successively determine agent queues corresponding to each of the user levels according to the agent skill value group, and label each of the determined agent queues with an agent queue skill level;
an agent queue skill level ranking module configured to determine a ranking of agent queue skill levels corresponding to each of the user levels according to the agent skill value group, in the ranking of agent queue skill levels, the agent queue skill level to which the agent queue having a correspondence relation with the user level is directed to is a first agent queue skill level ranked at a first place; and
a service request response module configured to find an idle agent orderly according to the corresponding ranking of agent queue skill levels in response to agent service requests transmitted by user terminals of different user levels.

A server including a processor; and a memory storing instructions, which, when executed by the processor, cause the processor to perform steps includes:
collecting historical service data of each of agents
performing classified counting of the collected historical service data of each of the agents according to different user levels being served, calculating agent skill values corresponding to the different user levels;
counting agent skill values of all agents corresponding to the same user level as an agent skill value group, successively determining agent queues corresponding to each of the user levels according to priorities of user levels, labeling each of the determined agent queues with an agent queue skill level;
determining a ranking of agent queue skill levels corresponding to each of the user levels according to the agent skill value group, in the ranking of agent queue skill levels, the agent queue skill level to which the agent queue having a correspondence relation with the user level is directed to is a first agent queue skill level ranked at a first place; and
finding an idle agent orderly according to the corresponding ranking of agent queue skill levels in response to agent service requests transmitted by user terminals of different user levels.

One or more non-transitory computer-readable storage medium storing computer-readable instructions that, when executed by at least one processors, cause the at least one processor to provide:
collecting historical service data of each of agents;
performing classified counting of the collected historical service data of each of the agents according to different user levels being served, calculating agent skill values of each of the agents corresponding to the different user levels;
counting agent skill values of all agents corresponding to the same user level as an agent skill value group, successively determining agent queues corresponding to each of the user levels according to priorities of user levels, labeling each of the determined agent queues with an agent queue skill level;
determining a ranking of agent queue skill levels corresponding to each of the user levels according to the agent skill value group, in the ranking of agent queue skill levels, the agent queue skill level to which the agent queue having a correspondence relation with the user level is directed to is a first agent queue skill level ranked at a first place; and
finding an idle agent orderly according to the corresponding ranking of agent queue skill levels in response to agent service requests transmitted by user terminals of different user levels.

The details of at least one embodiment of the present disclosure will be presented with reference to the following drawings and description. Other characteristic, purposes and advantages of the present disclosure will be more apparent from the specification, drawing and claims.

### BRIEF DESCRIPTION OF THE DRAWINGS

FIG. 1 is a schematic diagram of the application environment of a method of agent allocation according to an embodiment;
FIG. 2 is a block diagram of a server according to an embodiment;
FIG. 3 is a flowchart of a method of agent allocation according to an embodiment;
FIG. 4 is a table of correspondence relations between user levels, skill values and agents according to an embodiment;
FIG. 5 is a flowchart involving finding an idle agent according to an embodiment;
FIG. 6 is a flowchart involving ranking agent queue skill levels according to an embodiment;
FIG. 7 is a flowchart involving ranking agent queue skill levels according to another embodiment;
FIG. 8 is a flowchart of a method of agent allocation according to another embodiment;
FIG. 9 is a flowchart of a method of agent allocation according to yet another embodiment;
FIG. 10 is a block diagram of a device of agent allocation according to an embodiment;
FIG. 11 is a block diagram of a service request response module according to an embodiment; and
FIG. 12 is a block diagram of a service request response module according to another embodiment.

### DETAILED DESCRIPTION OF THE EMBODIMENTS

The present disclosure will be described in details in combination with the accompanying drawings and embodiments such that the purpose, technical solution and advantages of the present disclosure will be more apparent. It should be understood that the particular embodiments are described for the purpose of illustrating as opposed to restricting the present disclosure.

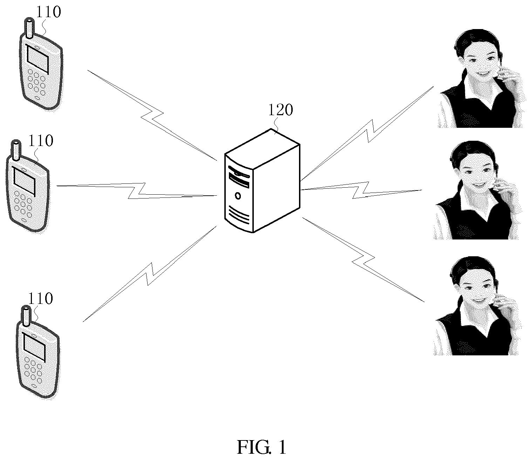

As shown in FIG. 1, in an embodiment, a schematic diagram of the application environment of a method of agent allocation is provided, the schematic diagram of the application environment includes user terminals 110, a server 120, and agent terminals 130. Both the user terminals 110 and agent terminals 130 can communicate with the server 120 through network. User terminals 110 can be mobile terminals used by users or land line communication terminals. The server 120 can be an independent physical server or a cluster of servers composed by a plurality of physical servers. The agent terminals 130 are landline communication terminals, each of the agent terminals corresponds a human agent. The server receives an agent service request transmitted by the user terminal and determines the user level such user belongs according to the user identifier ID (such as a telephone number) carried in the agent service request. The server determines an agent queue skill level associated with the user level where such user belongs according to predefined one-to-one mapping relations with the user levels, thereby finding the ranking of agent queue skill levels corresponding to the determined agent queue skill level, an agent queue skill level associated with the user level and in the ranking of agent queue skill levels is ranked at the top. During the finding of an idle agent, the server first finds the agent queue corresponding to the agent queue skill level associated with the user level, if no idle agent is found, then the server finds agent queues of other levels orderly according to the ranking of agent queue skill levels, until an idle agent is found, and establishes a communication channel between the found agent and the user terminal, so that the user can enjoy the counseling, subscribing and other services provided by the agent.

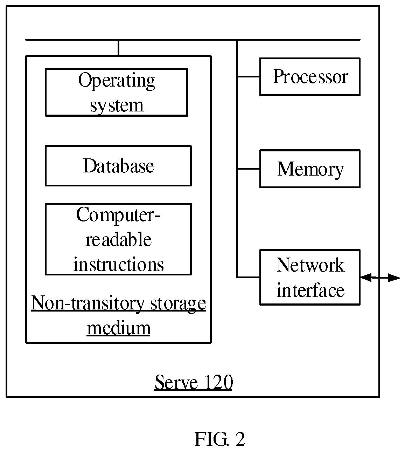

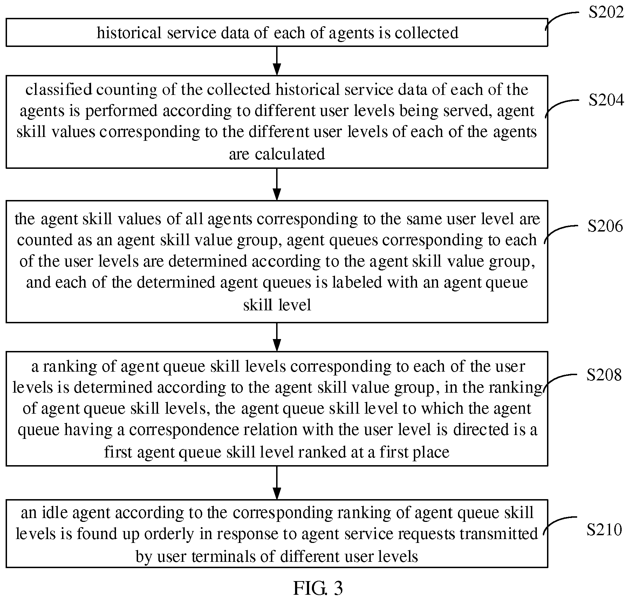

In an embodiment, as shown in FIG. 2, a server 120 is provided which includes a processor, a non-transitory storage medium, a RAM and a network interface connected through the system bus. The non-transitory storage medium of the server 120 stores an operating system, a database and at least one computer-readable instruction. When the computer-readable instruction is executed by the processor, a method of agent allocation shown in FIG. 3 can be performed by the processor. The database is configured to store data, such as storing the agent skill values, ranking of agent queue skill levels and other data related in the implementation of the method of agent allocation. The processor is configured to provide computation and control capability to support the operation of the entire server. The memory device of the server provides an operation environment with a high speed cache for the operating system, the database and the computer readable instructions in the non-volatile storage medium. The network interface is configured to establish a communication channel with the user terminal 110 and the agent terminal 120. A person skilled in the art should understand that, the structure of the server shown in FIG. 2 is merely a block diagram of a partial structure related to an embodiment of the present disclosure and does not limit the server to this embodiment. The specific server may include more or less components, be combined with certain components, or have a different configuration.

As shown in FIG. 3, in an embodiment, a method of agent allocation is provided, the method is explained, as an example, in application in the server shown in FIG.2, which particularly includes the following steps:

In step S202, historical service data of each of agents is collected.

The historical service data refers to the online communication record of the agent providing online counseling and subscribing for the user in a historical time. The historical service data includes connected online communication quantity the user level of the connected user in each online communication and the corresponding communication record, the user feedback and other data.

In step S204, classified counting of the collected historical service data of each of the agents is performed according to different user levels being served, agent skill values corresponding to the different user levels of each of the agents are calculated.

The server performs a classified counting of the communication record and the user feedback corresponding to the communication record according to the user level of the connected user in each communication record in the historical service data of the agent.

After the classified counting of the historical service data according to the user level, the server will perform data analysis according to each set of historical service data and calculate the skill value of the agent. A plurality of skill values will be calculated and obtained with respect to each of the agents, the calculated skill values have an one-to-one correspondence relationship with the user levels.

For example, the user levels include a first user level, a second user level, and a third user level. The server divides the historical service data of the agents into a first historical service data corresponding (connected) to the first user level users, a second historical service data corresponding to the second user level users, and a third historical service data corresponding to the third user level users.

A first skill value is obtained according to the first historical service data, the first skill data has a correspondence relation with the first user level. The first skill value represents the level of expertise of the agent in terms of serving the first user level users. Similarly, a second skill value is obtained according to the second historical service data, the second skill data has a correspondence relation with the second user level. A third skill value is obtained according to the third historical service data, the third skill data has a correspondence relation with the third user level.

In step S206, the agent skill values of all agents corresponding to the same user level are counted as an agent skill value group, agent queues corresponding to each of the user levels are determined according to the agent skill value group, and each of the determined agent queues is labeled with an agent queue skill level.

After calculation, each of the agents has a plurality of agent skill values. The agent skill values of all agents corresponding to the same user level and are counted as an agent skill value group, each agent skill value group corresponds one user level.

An agent queue group is determined through the agent skill value group corresponding to one certain user level and of all agents, e.g., agents whose skill values are greater than a preset threshold form the agent queue group. An agent queue skill level is designated to the determined agent queue group, the agent queue skill level is corresponding to the foregoing user level. Similarly, agent queues corresponding to other user levels are determined according to other agent skill value groups, agent queue skill levels corresponding to other user levels are thereby determined. In other words, one-to-one mapping relations between the user levels and the agent queue skill levels are established.

Furthermore, the priority of the user level is defined. Firstly, an agent queue corresponding to the user level of high priority is determined, and agent queues corresponding to other user levels are determined according to the priority order and among the agents to whom no level has been allocated.

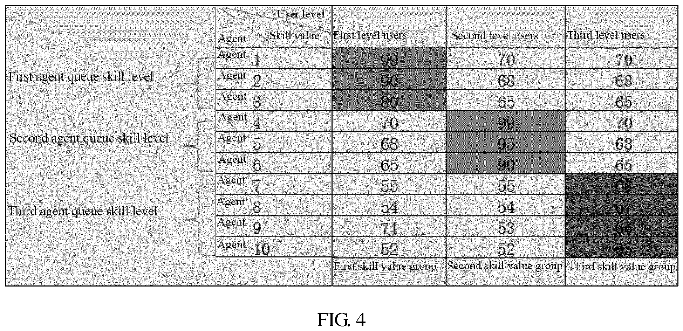

For example, as shown in FIG. 4, the user level includes a first user level, a second user level, and a third user level. The first skill value is the skill level with respect to the first user level, the second skill value is the skill level with respect to the second user level, and the third skill value is the skill level with respect to the third user level. The priority ranking of the user levels is: the first user level > the second user level > the third user level.

The first skill values of all agents are calculated as a first skill value group corresponding to the first user level, the second skill values of all agents are calculated as a second skill value group corresponding to the second user level, and the third skill values of all agents are calculated as a third skill value group corresponding to the third user level.

The agent queue corresponding to the first user level is determined by the first skill value group. In particular, according to the first skill value group, the agents whose first skill values are greater than a first preset threshold are divided as a first agent queue, the first agent queue is labeled as a first agent queue skill level, an association relation is established between the first agent queue skill level and the first user level.

The agent queue corresponding to the second user level is determined by the second skill value group. In particular, the second skill values of the agents other than the agent queue in the first agent queue skill level are obtained, the agents whose second skill values are greater than a second preset threshold are divided as a second agent queue, the second agent queue is labeled as a second agent queue skill level, an association between the second agent queue skill level and the second user level is established.

Other unallocated agents compose a third agent queue corresponding to the third user level, the third agent queue is labeled as a third agent queue skill level, an association between the third agent queue skill level and the third user level is established.

In another embodiment, the number of agents in each of the agent queue skill levels can be designated, the user level corresponding to the agent queue skill level and the agent queue skill level where each of the agents belongs are determined according to the designated number and the corresponding agent skill value.

In yet another embodiment, it can be designated that the proportion of agents of an agent queue skill level is equal to the proportion of users of the user level user number. The numerical proportion of agents of the agent queue skill level is equal to the ratio of the number of present level of agents to the number of all agents, the numerical proportion of users of the user level is equal to the ratio of the number of the present level of users to the number of the sum of all level of users. The user level corresponding to the agent queue skill level and the agent queue skill level where each of the agents belongs are determined according to the proportion limitation and the agent skill value group.

For example, the proportions of the three user levels are 4:3:3, then the proportions of the agent queue skill level to be divided are 4:3:3 as well. Assuming there are 100 agents all together, then the number of the agent queues corresponding to the first agent queue skill level corresponding to the first user level is 40. A ranking is performed in an order from large value to small value according to the first agent skill group corresponding to the first user level. The agent queues whose first agent skill values are within the top 40 are divided as the first agent queue skill level corresponding to the first user level. Accordingly, the agent queues corresponding to the second agent queue skill level and the third agent queue skill level can be determined one by one.

In the present embodiment, agent skill values in relation to different user levels are obtained according to the historical service record of agents. The agent groups which can provide better agent service to different user levels can be determined more precisely through the agent skill values of different user levels. Therefore, the division of agent groups and the determination of correspondence between the agent group and the user group becomes more reasonable.

In step S208, a ranking of agent queue skill levels corresponding to each of the user levels is determined according to the agent skill value group, in the ranking of agent queue skill levels, the agent queue skill level to which the agent queue having a correspondence relation with the user level is directed is a first agent queue skill level ranked at a first place.

Each user level corresponds an agent skill value group, and the ranking of agent skill levels corresponding to the user level is determined according to the agent skill value of the corresponding agent skill group.

It can be inferred from step S206 that, each user level corresponds an agent skill queue skill level, as shown in FIG. 4. The first agent queue skill level is determined through the agent skill group corresponding to the first user level, thus the first user level has an associated relation with the first agent queue skill level. Correspondingly, the second user level has an associated relation with the second agent queue skill level. The third user level has an associated relation with the third agent queue skill level.

In determining the ranking of agent queue skill levels corresponding to the user level, the agent queue skill level corresponding to the user level is regarded as a first agent queue skill level ranked at the first place, so as to ensure, to the largest extent, the quality of the agent service provided to the users.

In step S210, an idle agent according to the corresponding ranking of agent queue skill levels is found orderly in response to agent service requests transmitted by user terminals of different user levels.

When the user terminal transmits an agent service request to the server, such as calling to request an agent, the server determines the user level of the requesting user according to the user identifier carried in the agent service request, and then finds, one by one, an agent in the agent queue skill level according to the agent queue skill level corresponding to the user level, until an idle agent is found, then the found idle agent is connected.

The agent in the agent queue skill level is more familiar with the business within the authority of a user of an associated user level. That is, the agent in the agent queue skill level that has an associated relation with the user level can provide a better service. In the present embodiment, the agent in the agent queue skill level having an associated relation is positioned at a first place in the finding, so as to ensure, to the largest extent, the quality of the agent service provided to the user.

When no idle agent is found in the associated agent queue, other agent queues are found according to the obtained ranking of agent queue skill levels. A resource sharing of agents among different levels of queues is therefore achieved, such that the usage of the agent resources is maximized and the efficiency of the processing of incoming calls is improved.

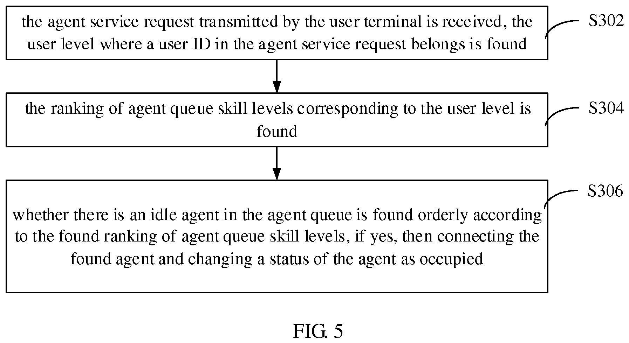

In an embodiment, as shown in FIG. 5, the step S210 of orderly finding the idle agent according to the corresponding ranking of agent queue skill levels in response to the agent service requests transmitted by the user terminals of different user levels includes the following steps:

In step S302, the agent service request transmitted by the user terminal is received, the user level where a user ID in the agent service request belongs is found.

The method of agent allocation in the present embodiment can be configured for a bank server for bank card counseling and subscribing, or servers in the network of network operators such as China mobile or China Unicom. In the present embodiment, the description is made with a bank server as an example.

A user applying for a bank card can build a communication channel with the bank server by a user terminal calling the service phone of the bank server. After a communication channel is established, the server can play a voice guidance to the user terminal, the voice guides the user and confirms with the user if the number of the calling terminal is the mobile number bond with the bank card to be counseled or subscribed with business, if the number of the calling terminal is not the mobile number bond with the bank card to be counseled or subscribed with business, the user is prompted to input the mobile number bond with the bank card to be counseled or subscribed with business, or input the identity number of the user. The played voice guide also plays a guide menu to the user, the user triggers a human agent request button according to the guide menu. When the user operation is detected by the user terminal, an agent service request is transmitted to the server.

The agent service request transmitted by the user terminal is received by the server, and user identifiers in the agent service request, such as the mobile number, the user identity number and so on, are extracted. The server determines the user level where the user belongs according to the extracted user identifier.

The user levels corresponding to each of the user identifiers are pre-stored on the server. In particular, the server performs determination of user level according to the balance of the bank card, the credit information, the purchasing of finance products and other historical bill data of the user, such as an ordinary user, a VIP user, a platinum user and a diamond user etc.

In step S304, the ranking of agent queue skill levels corresponding to the user level is found.

The server, in advance, divided different agent queue skill levels according to the agent skill value groups corresponding to different user levels, and determined, in advance, a corresponding ranking of agent queue skill levels with respect to each of the user levels.

When an agent service request is initiated by the user terminal, the server finds the predefined agent queue skill level corresponding to the user level to which the user terminal is directed.

In step S306, whether there is an idle agent in the agent queue is found orderly according to the found ranking of agent queue skill levels, if yes, then connecting the found agent and changing a status of the agent as occupied.

The server finds, one by one, the status of each of the agents in the agent queue corresponding to the agent queue skill level according to the sequence indicated by the ranking of agent queue skill levels, until an agent whose current status is idle is found, and the communication established with the user terminal is switched to the idle agent for the user to communicate with the agent.

In particular, the server first finds whether there is idle agent in the agent queue corresponding to the agent queue skill level associated with the user level, if yes, then the agent in the associated agent queue skill level is connected directly. If no, then other agent queues are found according to the sequence indicated in the ranking of agent queue skill levels, until an idle agent is found.

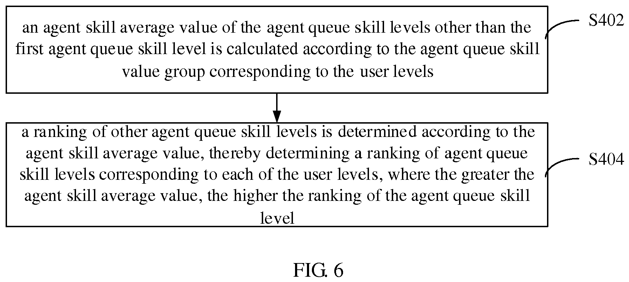

In an embodiment, as shown in FIG. 6, the step S208 of determining the ranking of agent queue skill levels corresponding to each of the user levels according to the agent skill value group, in the ranking of agent queue skill levels, the agent queue skill level to which the agent queue having the correspondence relation with the user level is directed is the first agent queue skill level ranked at the first place includes:

In step S402, an agent skill average value of the agent queue skill levels other than the first agent queue skill level is calculated according to the agent queue skill value group corresponding to the user levels.

In step S404, a ranking of other agent queue skill levels is determined according to the agent skill average value, thereby determining a ranking of agent queue skill levels corresponding to each of the user levels, where the greater the agent skill average value, the higher the ranking of the agent queue skill level.

The average value of agent skill values of all agents included in the agent queue skill levels other than the first agent queue skill level is calculated, the value average of agent skill values is calculated and obtained according to the agent skill value in the agent skill value group determined by the first agent queue skill level. That is, the agent skill values in the determined agent skill value group of all agents included in the agent queue skill level are obtained, and the agent skill average value is obtained after summing up and averaging.

According to FIG. 4, the agent skill value group determined according to the first agent queue skill level is the first agent skill value group, a sum value of the first skill values of all agents (the agent 5, the agent 6 and the agent 7) in the second agent queue skill level is calculated according to the first skill value group, and the agent skill average value is calculated according to the sum value, i.e., Vl=(70+68+65)/3. Similarly, according to the first skill value group, the average value of the agent skill values of the third agent queue skill level is calculated: V2=(55+54+53+52)/4. By a comparison, V1>V2, therefore, the ranking of agent queue skill levels with the first agent queue skill level at the top is: first agent queue skill level to second agent queue skill level to third agent queue skill level. The foregoing step is repeated, it is calculated the ranking of agent queue skill levels with the second agent queue skill level at the top is: second agent queue skill level to first agent queue skill level to third agent queue skill level. In calculating the ranking of agent queue skill levels with the third agent queue skill level at the top, since in the third skill value group, the agent skill average value of the first agent queue skill level is the same of the agent skill average value of the second agent queue skill level, as such, the first agent queue skill level can be ranked at the second place, or the second agent queue skill level can be ranked at the second place.

In another embodiment, the ranking of agent queue skill levels is performed on the basis that the probabilities of appearance of each of the agent queue skill levels in all the rankings are identical. For example, the ranking can be: first agent queue skill level to second agent queue skill level to third agent queue skill level; second agent queue skill level to third agent queue skill level to first agent queue skill level; third agent queue skill level to first agent queue skill level to second agent queue skill level. In the foregoing ranking, the first, second and the third places each includes three agent queue skill levels, and the probabilities of appearance of each of the agent queue skill levels are identical.

In the present embodiment, the ranking of the agent queue skill levels is determined similarly according to the calculated agent skill values of different user levels corresponding to the each of the agents, the agent queue skill level of the lowest service skill value is positioned at the last place of the find. On the premise that the agent queue resources are shared, the service quality can be ensured to the largest extent.

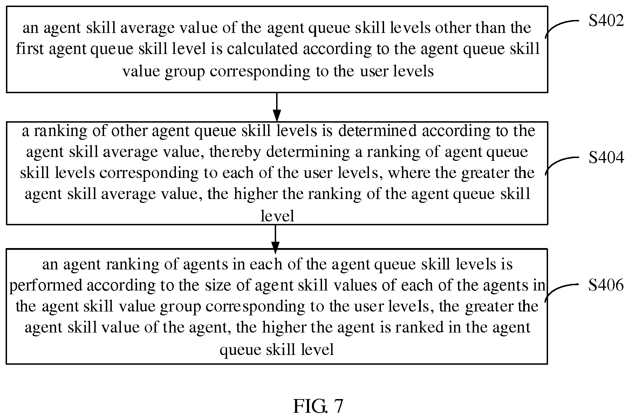

In an embodiment, as shown in FIG. 7, after the step S404 of determining a ranking of other agent queue skill levels according to the agent skill average value, thereby determining a ranking of agent queue skill levels corresponding to each of the user levels, where the greater the agent skill average value, the higher the ranking of the agent queue skill level, it further includes:

In step S406, an agent ranking of agents in each of the agent queue skill levels is performed according to the size of agent skill values of each of the agents in the agent skill value group corresponding to the user levels, the greater the agent skill value of the agent, the higher the agent is ranked in the agent queue skill level.

For example, as shown in FIG. 4, the ranking of agent queue skill levels with the first agent queue skill level at the top is: first agent queue skill level to second agent queue skill level to third agent queue skill level. The first agent queue skill level corresponds the first agent skill value group, an agent ranking is performed to the agents in the agent queue corresponding to the first agent queue skill level according to the first agent skill value group; Similarly, an agent ranking is performed to the agents in the agent queue corresponding to the second agent queue skill level according to the first agent skill value group; and an agent ranking is performed to the agents in the queue corresponding to the third agent queue skill level according to the first agent skill value group.

In response to the agent service request of the user terminal, the server performs a find of an idle agent according to the found ranking of agent queue skill levels corresponding to the user level and the agent ranking in each of the agent queue skill level.

For example, as shown in FIG. 4, the user requesting the agent service is a first level user, then the sequence of idle agent find is: the agent 1, the agent 2 and the agent 3 in the first agent queue skill level, the agent 4, the agent 5 and the agent 6 in the second agent queue skill level, the agent 9, the agent 7, the agent 8 and the agent 10 in the third agent queue skill level.

An agent ranking is performed to the agents in the agent queue skill level, such that the find of agent is better organized and the sequence of finding becomes more reasonable.

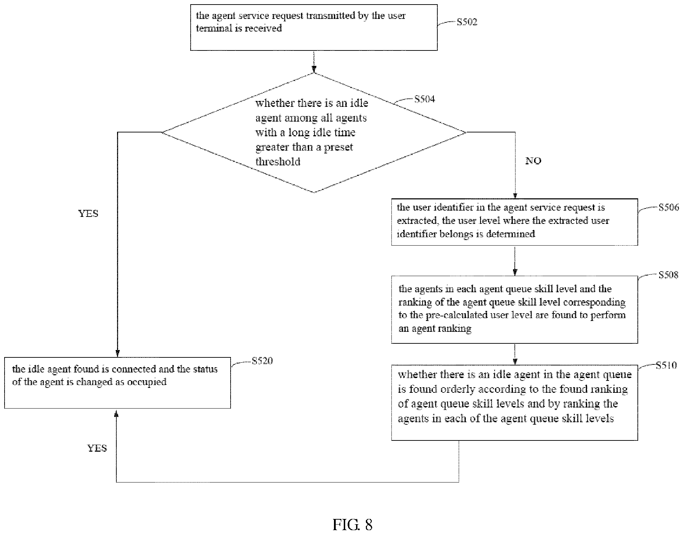

In an embodiment, as shown in FIG. 8, a method of agent allocation is provided, which particularly includes the following steps:

In step S502, the agent service request transmitted by the user terminal is received.

In step S504, whether there is an idle agent among all agents with a long idle time greater than a preset threshold.

If yes, then the step S520 is performed: the idle found agent is connected and the status of the agent is changed as occupied.

If no, then the step S506 is performed: the user identifier in the agent service request is extracted, the user level where the extracted user identifier belongs is determined.

In step S508, the agents in each agent queue skill level and the ranking of the agent queue skill level corresponding to the pre-calculated user level are found to perform an agent ranking.

In step S510, whether there is an idle agent in the agent queue is found orderly according to the found ranking of agent queue skill levels and by ranking the agents in each of the agent queue skill levels.

If yes, then the step S520 is performed.

In the present embodiment, before performing the idle agent inquiry according to the preset ranking of agent queue skill levels, whether there is an agent with a long idle time is found first, then the agent with a long idle time is connected first. The introduction of the determination of the idle time is configured to make up for the problem that some agents are difficult to be found, which is resulted from that the probabilities of being connected of each of the agents are different as the idle agent inquiry is performed according to the preset ranking of agent queue skill levels.

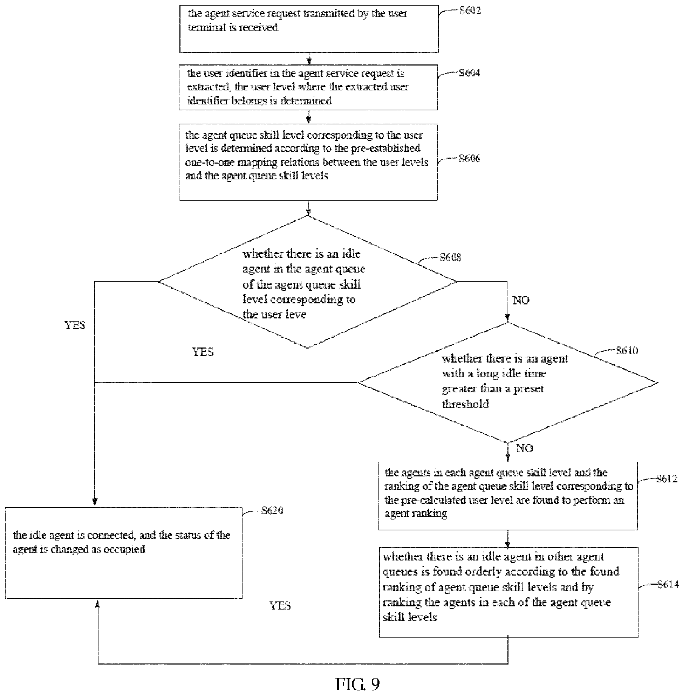

In another embodiment, as shown in FIG. 9, the allocation of agents can be performed by the following method:

In step S602, the agent service request transmitted by the user terminal is received.

In step S604, the user identifier in the agent service request is extracted, the user level where the extracted user identifier belongs is determined.

In step S606, the agent queue skill level corresponding to the user level is determined according to the pre-established one-to-one mapping relations between the user levels and the agent queue skill levels.

In step S608, whether there is an idle agent in the agent queue of the agent queue skill level corresponding to the user level is found, if yes, then the idle agent is connected and the status of the agent is changed as occupied.

If no, then step S610 is performed: in all the agents other than the agent queue found in step S608 whether there is an agent with a long idle time greater than a preset threshold is found, if yes, the step S620 is performed: the idle agent is connected, and the status of the agent is changed as occupied.

If no, then step S612 is performed: the agents in each agent queue skill level and the ranking of the agent queue skill level corresponding to the pre-calculated user level are found to perform an agent ranking.

In step S614, whether there is an idle agent in the agent queues other than the agent queue found in step S608 is found orderly according to the found ranking of agent queue skill levels and by ranking the agents in each of the agent queue skill levels.

If there is an idle agent according to the found ranking of agent queue skill levels, then the step S620 is performed.

In the present embodiment, it is firstly found whether there is an idle agent in the agent queue with associated agent queue skill level, so as to ensure the quality of the agent service, when there is no idle agent in the associated queue, then it is found among other agents whether there is an agent who has been unconnected for long, and the agent who has been idle for long is connected. The present embodiment can implement that on top of that the quality of agent service is ensured to the largest extent, the problem of low utilization of the agent resources due to long time in idle of the agent can be effectively prevented.

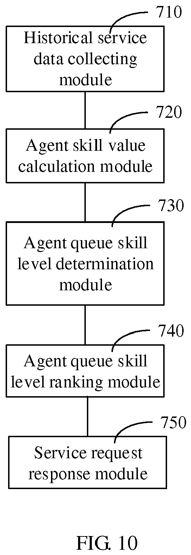

In an embodiment, as shown in FIG. 10, a device of agent allocation is provided, which particularly includes:

A historical service data collecting module 820 configured to collect historical service data of each of agents.

An agent skill value calculation module 720 configured to perform classified counting of the collected historical service data of each of the agents according to different user levels being served, and calculate agent skill values corresponding to the different user levels of each of the agents.

An agent queue skill level determination module 730 configured to count the agent skill values corresponding to a same user level of all agents as an agent skill value group, successively determine agent queues corresponding to each of the user levels according to the agent skill value group, and label each of the determined agent queues with an agent queue skill level.

An agent queue skill level ranking module 740 configured to determine a ranking of agent queue skill levels corresponding to each of the user levels according to the agent skill value group, in the ranking of agent queue skill levels, the agent queue skill level to which the agent queue having a correspondence relation with the user level is directed is a first agent queue skill level ranked at a first place.

A service request response module 750 configured to find an idle agent orderly according to the corresponding ranking of agent queue skill levels in response to agent service requests transmitted by user terminals of different user levels.

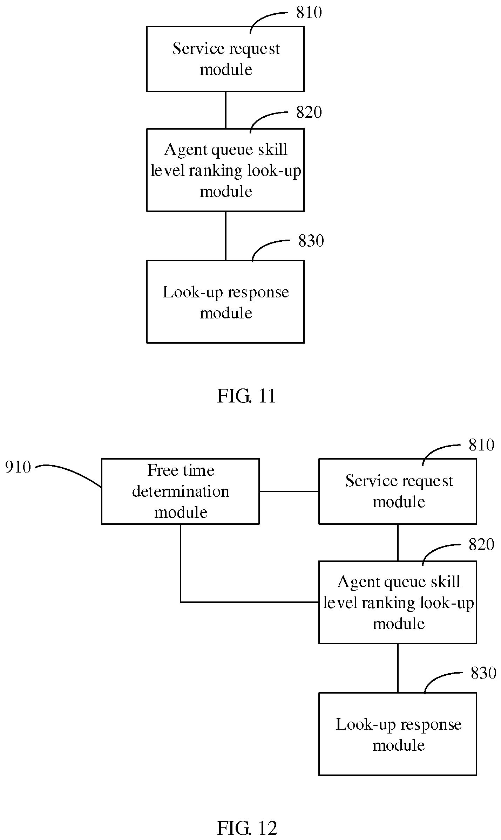

In an embodiment, as shown in FIG. 11, the service request response module 750 includes:

A service request module 810 configured to receive the agent service request transmitted by the user terminal, and find the user level where a user ID in the agent service request belongs.

An agent queue skill level ranking finding module 820 configured to find the ranking of agent queue skill levels corresponding to the user level.

A finding response module 830 configured to find orderly whether there is an idle agent in the agent queue according to the found ranking of agent queue skill levels, if yes, then connect the found agent and change a status of the agent as occupied.

In an embodiment, the agent queue skill level ranking module 740 is further configured to calculate an agent skill average value of the agent queue skill levels other than the first agent queue skill level according to the agent queue skill value group corresponding to the user levels; determine a ranking of other agent queue skill levels according to the agent skill average value, and thereby determining a ranking of agent queue skill levels corresponding to each of the user levels, the greater the agent skill average value, the higher the ranking of the agent queue skill level.

In an embodiment, the agent queue skill level ranking module 740 is further configured to perform an agent ranking of agents in each of the agent queue skill levels is performed according to the size of agent skill values of each of the agents in the agent skill value group corresponding to the user levels. The greater the agent skill value of the agent, the higher the agent is ranked in the agent queue skill level.

In an embodiment, as shown in FIG 12, the device of agent allocation further includes:

An idle time determination module 910 configured to find among all agents whether there is an idle agent whose idle time is greater than a preset value when the agent service request transmitted by the terminal is received, if yes, then connect the idle agent; and if no, then find the idle agent according to the corresponding ranking of agent queue skill levels.

The various modules of the foregoing device of network access identification can be implemented, in part or as a whole, by software, hardware or the combinations thereof. The network interface can be an ethernet card or a WLAN card etc. The foregoing modules can be embedded in or independent from the processor of a server and in the form of hardware, or be stored in a memory of server and in the form of software, so as to facilitate the processor to call and execute corresponding operations of the foregoing various modules. The processor can be a CPU, a microprocessor, a Single Chip Microcomputer and so on.

A person skilled in the art should understand that the processes of the methods in the above embodiments can be, in full or in part, implemented by computer programs instructing underlying hardware, the programs can be stored in a computer-readable storage medium, such as in the embodiments of the present disclosure, the program can be stored in the storage medium of the computer system and be executed by at least one processor of the computer system to implement the processes in the embodiments of the various foregoing methods. The storage medium can be a disk, a CD, a Read-Only Memory (ROM) and other non-volatile storage mediums or Random Access Memory (RAM) and so on.

The foregoing respective technical features involved in the respective embodiments can be combined arbitrarily, for brevity, not all possible combinations of the respective technical features in the foregoing embodiments are described, however, to the extent they have no collision with each other, the combination of the respective technical features shall be considered to be within the scope of the description.

The foregoing implementations are merely specific embodiments of the present disclosure, and are not intended to limit the protection scope of the present disclosure. It should be noted that any variation or replacement readily figured out by persons skilled in the art within the technical scope disclosed in the present disclosure shall all fall into the protection scope of the present disclosure. Therefore, the protection scope of the present disclosure shall be subject to the protection scope of the claims.

## Claims

1. A method of agent allocation, comprising:
collecting historical service data of each of agents;
performing classified counting of the collected historical service data of each of the agents according to different user levels being served, calculating agent skill values of each of the agents corresponding to the different user levels;
counting agent skill values of all agents corresponding to the same user level as an agent skill value group, successively determining agent queues corresponding to each of the user levels according to priorities of user levels, labeling each of the determined agent queues with an agent queue skill level;
determining a ranking of agent queue skill levels corresponding to each of the user levels according to the agent skill value group, wherein in the ranking of agent queue skill levels, the agent queue skill level to which the agent queue having a correspondence relation with the user level is directed is a first agent queue skill level ranked at a first place; and
finding an idle agent orderly according to the corresponding ranking of agent queue skill levels in response to agent service requests transmitted by user terminals of different user levels.

2. The method of claim 1, wherein the finding the idle agent orderly according to the corresponding ranking of agent queue skill levels in response to the agent service requests transmitted by the user terminals of the different user levels comprises:
receiving the agent service request transmitted by the user terminal, finding the user level where a user ID in the agent service request belongs;
finding the ranking of agent queue skill levels corresponding to the user level; and
finding orderly whether there is an idle agent in the agent queue according to the found ranking of agent queue skill levels, if yes, then connecting the found agent and changing a status of the agent as occupied.

3. The method of claim 1, wherein the user levels comprise a first user level, a second user level, and a third user level, wherein a priority of the first user level is greater than that of the second user level, and a priority of the second user level is greater than that of the third user level;
the counting the agent skill values of all agents corresponding to the same user level as the agent skill value group, successively determining agent queues corresponding to each of the user levels according to priorities of user levels, labeling each of the determined agent queues with the agent queue skill level comprises:
counting the agent skill values of the first user level as a first agent skill value group, counting the agent skill values of the second user level as a second agent skill value group, and counting the agent skill value of the third user level as a third agent skill value group;
determining the agents whose agent skill values are greater than a preset threshold as a first agent queue corresponding to the first user level according to the agent skill values in the first agent skill value group, labeling the determined first agent queue as a first agent queue skill level;
obtaining agent skill values corresponding to agents other than the first agent queue from the second agent skill group, determining agents whose obtained agent skill values are greater than a preset threshold as a second agent queue corresponding to the second user level, labeling the determined second agent queue as a second agent queue skill level; and
determining other unallocated agents as a third agent queue corresponding to the third user level, and labeling the determined third agent queue as a third agent queue skill level.

4. The method of claim 1, wherein the determining the ranking of the agent queue skill levels corresponding to each of the user levels according to the agent skill value group, wherein in the ranking of agent queue skill levels, the agent queue skill level to which the agent queue having the correspondence relation with the user level is directed is the first agent queue skill level ranked at the first place comprises:
calculating an agent skill average value of the agent queue skill levels other than the first agent queue skill level according to the agent queue skill value group corresponding to the user levels; and
determining a ranking of other agent queue skill levels according to the agent skill average value, thereby determining the ranking of agent queue skill levels corresponding to each of the user levels, wherein the greater the agent skill average value, the higher the ranking of the agent queue skill level.

5. The method of claim 4, further comprising:
performing an agent ranking of agents in each of the agent queue skill levels according to the size of agent skill values of each of the agents in the agent skill value group corresponding to the user levels, wherein the greater the agent skill value of the agent, the higher the agent is ranked in the agent queue skill level.

6. The method of any one of claims 2 to 5, further comprising:
finding among all agents whether there is an idle agent with a long idle time greater than a preset value when receiving the agent service request transmitted by the terminal, if yes, then connecting the idle agent; and if no, then finding the idle agent according to the corresponding ranking of agent queue skill levels .

7. A device of agent allocation, comprising:
a historical service data collecting module configured to collect historical service data of each of agents;
an agent skill value calculation module configured to perform classified counting of the collected historical service data of each of the agents according to different user levels being served, and calculate agent skill values of each of the agents corresponding to the different user levels;
an agent queue skill level determination module configured to count the agent skill values of all agents corresponding to the same user level as an agent skill value group, successively determine agent queues corresponding to each of the user levels according to the agent skill value group, and label each of the determined agent queues with an agent queue skill level;
an agent queue skill level ranking module configured to determine a ranking of agent queue skill levels corresponding to each of the user levels according to the agent skill value group, wherein in the ranking of agent queue skill levels, the agent queue skill level to which the agent queue having a correspondence relation with the user level is directed is a first agent queue skill level ranked at a first place; and
a service request response module configured to find an idle agent orderly according to the corresponding ranking of agent queue skill levels in response to agent service requests transmitted by user terminals of different user levels.

8. The device of claim 7, wherein the service request response module comprises:
a service request module configured to receive the agent service request transmitted by the user terminal, and find the user level where a user ID in the agent service request belongs;
an agent queue skill level ranking finding module configured to find the ranking of agent queue skill levels corresponding to the user level; and
a finding response module configured to find orderly whether there is an idle agent in the agent queue according to the found ranking of agent queue skill levels, if yes, then connect the found agent and change a status of the agent as occupied.

9. The device of claim 7, wherein the user levels comprise a first user level, a second user level, and a third user level, wherein a priority of the first user level is greater than that of the second user level, and a priority of the second user level is greater than that of the third user level;
the agent queue skill level determination module is further configured to count the agent skill values of the first user level as a first agent skill value group, count the agent skill values of the second user level as a second agent skill value group, and count the agent skill value of the third user level as a third agent skill value group; determine the agents whose agent skill values are greater than a preset threshold as a first agent queue corresponding to the first user level according to the agent skill values in the first agent skill value group, label the determined first agent queue as a first agent queue skill level; obtain agent skill values corresponding to agents other than the first agent queue from the second agent skill group, determine the agents whose obtained agent skill values are greater than a preset threshold as a second agent queue corresponding to the second user level, label the determined second agent queue as a second agent queue skill level; determine other unallocated agents as a third agent queue corresponding to the third user level, and label the determined third agent queue as a third agent queue skill level.

10. The device of claim 7, wherein the agent queue skill level ranking module is further configured to calculate an agent skill average value of the agent queue skill levels other than the first agent queue skill level according to the agent queue skill value group corresponding to the user levels;
determine a ranking of other agent queue skill levels according to the agent skill average value, and thereby determining a ranking of agent queue skill levels corresponding to each of the user levels, wherein the greater the agent skill average value, the higher the ranking of the agent queue skill level.

11. The device of claim 10, wherein the agent queue skill level ranking module is further configured to perform an agent ranking of agents in each of the agent queue skill levels according to the size of agent skill values of each of the agents in the agent skill value group corresponding to the user levels, wherein the greater the agent skill value of the agent, the higher the agent is ranked in the agent queue skill level.

12. The device of any one of claims 8 to 11, further comprising:
an idle time determination module configured to find among all agents whether there is an idle agent with a long idle time greater than a preset value when the agent service request transmitted by the terminal is received, if yes, then connect the idle agent; and if no idle agent, then find the idle agent according to the corresponding ranking of agent queue skill levels.

13. A server comprising a processor; and a memory storing instructions, which, when executed by the processor, cause the processor to perform steps comprising:
collecting historical service data of each of agents;
performing classified counting of the collected historical service data of each of the agents according to different user levels being served, calculating agent skill values of each of the agents corresponding to the different user levels;
counting agent skill values of all agents corresponding to the same user level as an agent skill value group, successively determining agent queues corresponding to each of the user levels according to priorities of user levels, labeling each of the determined agent queues with an agent queue skill level;
determining a ranking of agent queue skill levels corresponding to each of the user levels according to the agent skill value group, wherein in the ranking of agent queue skill levels, the agent queue skill level to which the agent queue having a correspondence relation with the user level is directed is a first agent queue skill level ranked at a first place; and
finding an idle agent orderly according to the corresponding ranking of agent queue skill levels in response to agent service requests transmitted by user terminals of different user levels.

14. The server of claim 13, wherein the finding the idle agent orderly according to the corresponding ranking of agent queue skill levels in response to the agent service requests transmitted by the user terminals of the different user levels executed by the processor comprises:
receiving the agent service request transmitted by the user terminal, finding the user level where a user ID in the agent service request belongs;
finding the ranking of agent queue skill levels corresponding to the user level; and
finding orderly whether there is an idle agent in the agent queue according to the found ranking of agent queue skill levels, if yes, then connecting the found agent and changing a status of the agent as occupied.

15. The server of claim 13, wherein the user levels comprise a first user level, a second user level, and a third user level, wherein a priority of the first user level is greater than that of the second user level, and a priority of the second user level is greater than that of the third user level;
the counting the agent skill values of all agents corresponding to the same user level as an agent skill value group, successively determining agent queues corresponding to each of the user levels according to priorities of user levels, labeling each of the determined agent queues with an agent queue skill level executed by the processor comprises:
counting the agent skill values of the first user level as a first agent skill value group, counting the agent skill values of the second user level as a second agent skill value group, and counting the agent skill value of the third user level as a third agent skill value group;
determining the agents whose agent skill values are greater than a preset threshold as a first agent queue corresponding to the first user level according to the agent skill values in the first agent skill value group, labeling the determined first agent queue as a first agent queue skill level;
obtaining agent skill values corresponding to agents other than the first agent queue from the second agent skill group, determining the agents whose obtained agent skill values are greater than a preset threshold as a second agent queue corresponding to the second user level, labeling the determined second agent queue as a second agent queue skill level; and
determining other unallocated agents as a third agent queue corresponding to the third user level, and labeling the determined third agent queue as a third agent queue skill level.

16. The server of claim 13, wherein the determining the ranking of the agent queue skill levels corresponding to each of the user levels according to the agent skill value group, wherein in the ranking of agent queue skill levels, the agent queue skill level to which the agent queue having the correspondence relation with the user level is directed is the first agent queue skill level ranked at the first place executed by the processor comprises:
calculating an agent skill average value of the agent queue skill levels other than the first agent queue skill level according to the agent queue skill value group corresponding to the user levels; and
determining a ranking of other agent queue skill levels according to the agent skill average value, thereby determining the ranking of agent queue skill levels corresponding to each of the user levels, wherein the greater the agent skill average value, the higher the ranking of the agent queue skill level.

17. The server of claim 16, wherein the processor further executes the instructions to provide:
performing an agent ranking of agents in each of the agent queue skill levels according to the size of agent skill values of each of the agents in the agent skill value group corresponding to the user levels, wherein the greater the agent skill value of the agent, the higher the agent is ranked in the agent queue skill level.

18. The server of any one of claims 14 to 17, wherein the processor further executes the instructions to provide:
finding among all agents whether there is an idle agent with a long idle time greater than a preset value when the agent service request transmitted by the terminal is received, if yes, then connecting the idle agent; and if no, then finding the idle agent according to the corresponding ranking of agent queue skill levels .

19. One or more non-transitory computer-readable storage medium storing computer-readable instructions that, when executed by at least one processors, cause the at least one processor to provide:
collecting historical service data of each of agents;
performing classified counting of the collected historical service data of each of the agents according to different user levels being served, calculating agent skill values of each of the agents corresponding to the different user levels;
counting agent skill values of all agents corresponding to the same user level as an agent skill value group, successively determining agent queues corresponding to each of the user levels according to priorities of user levels, labeling each of the determined agent queues with an agent queue skill level;
determining a ranking of agent queue skill levels corresponding to each of the user levels according to the agent skill value group, wherein in the ranking of agent queue skill levels, the agent queue skill level to which the agent queue having a correspondence relation with the user level is directed is a first agent queue skill level ranked at a first place; and
finding an idle agent orderly according to the corresponding ranking of agent queue skill levels in response to agent service requests transmitted by user terminals of different user levels.

20. The storage medium of claim 19, wherein the finding the idle agent orderly according to the corresponding ranking of agent queue skill levels in response to the agent service requests transmitted by the user terminals of the different user levels executed by the processor comprises:
receiving the agent service request transmitted by the user terminal, finding the user level where a user ID in the agent service request belongs;
finding the ranking of agent queue skill levels corresponding to the user level; and
finding orderly whether there is an idle agent in the agent queue according to the found ranking of agent queue skill levels, if yes, then connecting the found agent and changing a status of the agent as occupied.

21. The storage medium of claim 19, wherein the user levels comprise a first user level, a second user level, and a third user level, wherein a priority of the first user level is greater than that of the second user level, and a priority of the second user level is greater than that of the third user level;
the counting the agent skill values of all agents corresponding to the same user level as an agent skill value group, successively determining agent queues corresponding to each of the user levels according to priorities of user levels, labeling each of the determined agent queues with an agent queue skill level executed by the processor comprises:
counting the agent skill values of the first user level as a first agent skill value group, counting the agent skill values of the second user level as a second agent skill value group, and counting the agent skill value of the third user level as a third agent skill value group;
determining the agents whose agent skill values are greater than a preset threshold as a first agent queue corresponding to the first user level according to the agent skill values in the first agent skill value group, labeling the determined first agent queue as a first agent queue skill level;
obtaining agent skill values corresponding to agents other than the first agent queue from the second agent skill group, determining the agents whose obtained agent skill values are greater than a preset threshold as a second agent queue corresponding to the second user level, labeling the determined second agent queue as a second agent queue skill level; and
determining other unallocated agents as a third agent queue corresponding to the third user level, and labeling the determined third agent queue as a third agent queue skill level.

22. The storage medium of claim 19, wherein the determining the ranking of the agent queue skill levels corresponding to each of the user levels according to the agent skill value group, wherein in the ranking of agent queue skill levels, the agent queue skill level to which the agent queue having the correspondence relation with the user level is directed is the first agent queue skill level ranked at the first place executed by the processor comprises:
calculating an agent skill average value of the agent queue skill levels other than the first agent queue skill level according to the agent queue skill value group corresponding to the user levels; and
determining a ranking of other agent queue skill levels according to the agent skill average value, thereby determining the ranking of agent queue skill levels corresponding to each of the user levels, wherein the greater the agent skill average value, the higher the ranking of the agent queue skill level.

23. The storage medium of claim 22, wherein the processor further executes the instructions to provide:
performing an agent ranking of agents in each of the agent queue skill levels according to the size of agent skill values of each of the agents in the agent skill value group corresponding to the user levels, wherein the greater the agent skill value of the agent, the higher the agent is ranked in the agent queue skill level.

24. The storage medium of claims 20 to 23, wherein the processor further executes the instructions to provide:
finding among all agents whether there is an idle agent with a long idle time greater than a preset value when the agent service request transmitted by the terminal is received, if yes, then connecting the idle agent; and if no, then finding the idle agent according to the corresponding ranking of agent queue skill levels.
